# EUROPEAN PATENT APPLICATION

(11) **EP 2 530 130 A1**
(43) Date of publication of application: **05.12.2012**
(21) Application number: 11736927.2
(22) Date of filing: 21.01.2011
(51) Int. Cl.: C09J 7/02, C09J 9/02, C09J 11/04, C09J 133/00

(54) **CONDUCTIVE ADHESIVE TAPE**

(30) Priority: 26.01.2010 JP 2010014728
(71) Applicant: Nitto Denko Corporation, Osaka 567-8680 (JP)
(72) Inventor: BUZOUJIMA, Yasushi, Ibaraki-shi Osaka 567-8680 (JP); TAMAI, Hironori, Ibaraki-shi Osaka 567-8680 (JP); DAIGAKU, Noritsugu, Ibaraki-shi Osaka 567-8680 (JP)
(74) Representative: Grünecker, Kinkeldey, Stockmair & Schwanhäusser
(86) International application number: PCT/JP2011/051052
(87) International publication number: WO 2011/093214

(57) **Abstract**

Provided is an electroconductive pressure-sensitive adhesive tape which is satisfactorily less corrosive and is capable of maintaining stable electrical conductivity over the long term.

The electroconductive pressure-sensitive adhesive tape has at least one acrylic pressure-sensitive adhesive layer. The electroconductive pressure-sensitive adhesive tape has a volume resistance of 1× 10¹ Ω and has a total amount of acrylic acid ions and methacrylic acid ions extracted from the electroconductive pressure-sensitive adhesive tape of 20 ng/cm² or less per unit area of the acrylic pressure-sensitive adhesive layer, where the extraction is performed with pure water under conditions of 100°C for 45 minutes, and the total amount is measured through ion chromatography.

## Description

### Technical Field

The present invention relates to electroconductive pressure-sensitive adhesive tapes. More specifically, it relates to electroconductive pressure-sensitive adhesive tapes to be used typically for electrical conduction between two points separated from each other.

### Background Art

Electroconductive pressure-sensitive adhesive tapes have electrical conductivity (particularly, electrical conductivity in the thickness direction) and are used typically for electrical conduction between two points separated from each other and for electromagnetic shielding. Customarily known examples of such electroconductive pressure-sensitive adhesive tapes include electroconductive pressure-sensitive adhesive tapes each including a metallic foil and a pressure-sensitive adhesive layer (self-adhesive layer) provided on one side of the metallic foil, in which a conducting part is arranged on the side of the metallic foil covered by the pressure-sensitive adhesive layer, and the conducting part penetrates the pressure-sensitive adhesive layer and has a terminal on the extremity thereof (see, for example, Patent Literature (PTL) 1, PTL 2, and PTL 3); and electroconductive pressure-sensitive adhesive tapes each including a metallic foil and a pressure-sensitive adhesive layer arranged on the metallic foil, in which the pressure-sensitive adhesive layer is formed from an electroconductive pressure-sensitive adhesive including a pressure-sensitive adhesive material and an electroconductive filler, such as nickel powder, dispersed in the pressure-sensitive adhesive material (see, for example, PTL 4 and PTL 5).

The electroconductive pressure-sensitive adhesive tape, when used for electrical conduction purpose, is frequently directly applied to a metallic adherend typically in electronic appliances. In this case, the region of the adherend to which the electroconductive pressure-sensitive adhesive tape is applied may be gradually corroded, and, in addition, the electroconductive substrate (metallic foil) of the electroconductive pressure-sensitive adhesive tape may also be corroded. The corrosion of the metallic adherend or the metallic foil, if proceeds, causes increase in electric resistance (interfacial resistance between the pressure-sensitive adhesive layer of the electroconductive pressure-sensitive adhesive tape and the adherend or metallic foil), and this causes the electroconductive pressure-sensitive adhesive tape to fail to maintain stable electrical conductivity (electroconductivity).

Of such electroconductive pressure-sensitive adhesive tapes now available, there has not yet been obtained an electroconductive pressure-sensitive adhesive tape which is satisfactorily less corrosive to metals (particularly, to metallic adherends) (the properties are hereinafter also simply referred to as "less-corrosive properties").

### Citation List

### Patent Literature

PTL 1: Japanese Unexamined Patent Application Publication No. H08-185714
PTL 2: Japanese Unexamined Patent Application Publication No. H10-292155
PTL 3: Japanese Unexamined Patent Application Publication No. H11-302615
PTL 4: Japanese Unexamined Patent Application Publication No. 2004-263030
PTL 5: Japanese Unexamined Patent Application Publication No. 2005-277145

### Summary of Invention

### Technical Problem

An object of the present invention is to provide an electroconductive pressure-sensitive adhesive tape which is satisfactorily less corrosive and maintains stable electrical conductivity.

### Solution to Problem

After intensive investigations under these circumstances, the present inventors have found that an electroconductive pressure-sensitive adhesive tape which is satisfactorily less corrosive can be obtained by controlling the volume resistance of the pressure-sensitive adhesive tape within a specific range and controlling, to a specific level or less, the total amount of acrylic acid ions and methacrylic acid ions extracted upon boiling extraction from the pressure-sensitive adhesive tape, namely, the total amount of acrylic acid ion components and methacrylic acid ion components which have been contained in an acrylic pressure-sensitive adhesive layer and are liberated therefrom by the action of water.

Specifically, the present invention provides an electroconductive pressure-sensitive adhesive tape which has at least one acrylic pressure-sensitive adhesive layer, in which the electroconductive pressure-sensitive adhesive tape has a volume resistance of 1× 10¹ Ω or less, and the electroconductive pressure-sensitive adhesive tape has a total amount of acrylic acid ions and methacrylic acid ions extracted from the electroconductive pressure-sensitive adhesive tape of 20 ng/cm² or less per unit area of the acrylic pressure-sensitive adhesive layer, where the extraction is performed with pure water under conditions of 100°C for 45 minutes, and the total amount is measured through ion chromatography.

In an embodiment, the electroconductive pressure-sensitive adhesive tape may have a metallic foil; and the acrylic pressure-sensitive adhesive layer present on or above one side of the metallic foil, in which the metallic foil has a conducting part penetrating the acrylic pressure-sensitive adhesive layer and having a terminal at the extremity thereof.

In another embodiment of the electroconductive pressure-sensitive adhesive tape, the acrylic pressure-sensitive adhesive layer may contain an acrylic polymer; and an electroconductive filler in an amount of from 10 to 500 parts by weight relative to the total amount (100 parts by weight) of monomer component(s) constituting the acrylic polymer.

In still another embodiment, the electroconductive pressure-sensitive adhesive tape may have a metallic foil; and the acrylic pressure-sensitive adhesive layer present on or above at least one side of the metallic foil. Advantageous Effects of Invention

The electroconductive pressure-sensitive adhesive tape according to the present invention is satisfactorily less corrosive and does not cause corrosion to a metallic adherend and to the metallic foil which the electroconductive pressure-sensitive adhesive tape has as an electroconductive substrate. The electroconductive pressure-sensitive adhesive tape can therefore exhibit stable electrical conductivity. Particularly, the electroconductive pressure-sensitive adhesive tape according to the present invention is less corrosive over the long term and is therefore advantageously usable typically in electronic appliances requiring long-term stable electrical conductivity.

### Brief Description of Drawings

[Fig. 1] Fig. 1 is a schematic view (plan view) illustrating an embodiment (electroconductive pressure-sensitive adhesive tape T₁) of the electroconductive pressure-sensitive adhesive tape according to the present invention.
[Fig. 2] Fig. 2 is a schematic view (cross-sectional view taken along line A-A of Fig. 1) illustrating the embodiment (electroconductive pressure-sensitive adhesive tape T₁) of the electroconductive pressure-sensitive adhesive tape according to the present invention.
[Fig. 3] Fig. 3 is a schematic view (plan view) illustrating a test sample used in evaluation of the less-corrosive properties (rate of resistance change) in working examples.

### Description of Embodiments

An electroconductive pressure-sensitive adhesive tape according to the present invention is an electroconductive pressure-sensitive adhesive tape having at least one acrylic pressure-sensitive adhesive layer. The electroconductive pressure-sensitive adhesive tape according to the present invention may be a double-sided pressure-sensitive adhesive tape having adhesive faces as both surfaces of the tape; or may be a single-sided pressure-sensitive adhesive tape having an adhesive face as only one surface of the tape. As used herein the term "electroconductive pressure-sensitive adhesive tape" also means and includes a sheet-like one, namely, an "electroconductive pressure-sensitive adhesive sheet." The "surface of a pressure-sensitive adhesive layer" is also referred to as an "adhesive face."

The electroconductive pressure-sensitive adhesive tape according to the present invention may be a so-called "substrate-less type" electroconductive pressure-sensitive adhesive tape having no substrate (substrate layer) (hereinafter also referred to as "substrate-less electroconductive pressure-sensitive adhesive tape"); or may be a substrate-supported type electroconductive pressure-sensitive adhesive tape. Examples of the substrate-less electroconductive pressure-sensitive adhesive tape include a double-sided pressure-sensitive adhesive tape having the acrylic pressure-sensitive adhesive layer alone. Examples of the substrate-supported type electroconductive pressure-sensitive adhesive tape include a single-sided pressure-sensitive adhesive tape having a substrate and, on one side thereof, the acrylic pressure-sensitive adhesive layer; and a double-sided pressure-sensitive adhesive tape having a substrate and, on both sides thereof, the acrylic pressure-sensitive adhesive layer.

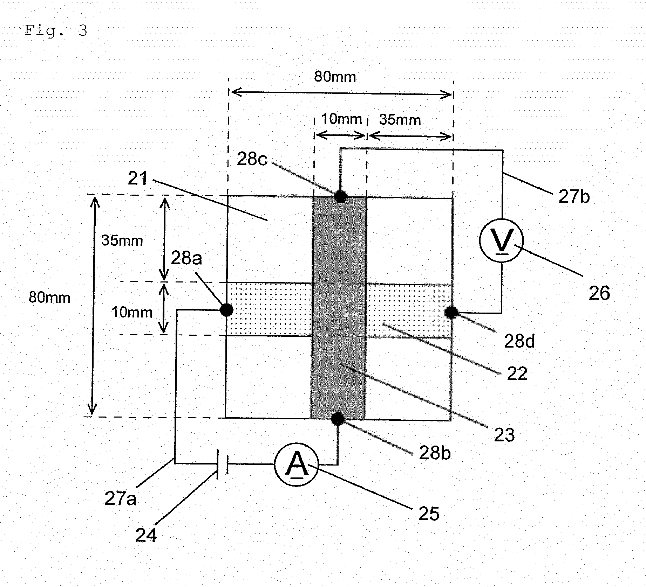

The electroconductive pressure-sensitive adhesive tape according to the present invention has a volume resistance of 1× 10¹ Ω or less, more preferably 1× 10° Ω (1 Ω) or less, and furthermore preferably 1× 10⁻¹ Ω or less. The electroconductive pressure-sensitive adhesive tape, if having a volume resistance of more than 1× 10¹ Ω, may suffer from insufficient electrical conductivity. The volume resistance may be measured according to a four probe method. Specifically, the volume resistance may be measured according to the method described in "(2) Volume Resistance" in [Evaluations] mentioned later typically using the test sample illustrated in Fig. 3. As used herein the phrase "having electrical conductivity (electroconductivity)" means that one in question has a volume resistance within the above-specified range.

The total amount of acrylic acid ions and methacrylic acid ions extracted from the electroconductive pressure-sensitive adhesive tape according to the present invention per unit area of the acrylic pressure-sensitive adhesive layer, where the extraction is performed with pure water under conditions of 100°C for 45 minutes, and the total amount is measured through ion chromatography, is herein also simply referred to as an "amount of extracted (meth)acrylic acid ions." The amount of extracted (meth)acrylic acid ions is 20 ng/cm² or less (e.g., from 0 to 20 ng/cm²), preferably 10 ng/cm² or less (e.g., from 0 to 10 ng/cm²), and more preferably 5 ng/cm² or less (e.g., from 0 to 5 ng/cm²), per unit area of the acrylic pressure-sensitive adhesive layer in the electroconductive pressure-sensitive adhesive tape according to the present invention. Particularly, the electroconductive pressure-sensitive adhesive tape, when having an amount of extracted (meth)acrylic acid ions of 5 ng/cm² or less, may be satisfactorily less corrosive over the long term and/or satisfactorily less corrosive under more hot and humid conditions, thus being desirable. The amount of extracted (meth)acrylic acid ions indicates the degree of easiness of liberation of acrylic acid ions and methacrylic acid ions from the acrylic pressure-sensitive adhesive layer by the action of water, when the electroconductive pressure-sensitive adhesive tape is placed typically in a humidified environment. An electroconductive pressure-sensitive adhesive tape having an amount of extracted (meth)acrylic acid ions of more than 20 ng/cm² tends to cause corrosion to metals (e.g., the metallic adherend and/or the metallic foil (electroconductive substrate)) by the action of (meth)acrylic acid ions liberated from the acrylic pressure-sensitive adhesive layer upon storage in the presence of water such as in a humidified environment. Thus, this electroconductive pressure-sensitive adhesive tape has insufficient less-corrosive properties.

The "total amount of acrylic acid ions and methacrylic acid ions extracted from the electroconductive pressure-sensitive adhesive tape according to the present invention, where the extraction is performed with pure water under conditions of 100°C for 45 minutes, and the total amount is measured through ion chromatography" may be measured in the following manner.
Initially, a specimen is prepared by cutting a piece of suitable size from the electroconductive pressure-sensitive adhesive tape, and, when a separator is provided, removing the separator so as to expose an adhesive face. In the case of a double-sided pressure-sensitive adhesive tape, a poly(ethylene terephthalate) (PET) film (25 to 50 µm thick) is applied to one of adhesive faces, and the other adhesive face alone is exposed to form the specimen. In this process, the surface of the acrylic pressure-sensitive adhesive layer (acrylic pressure-sensitive adhesive layer which the electroconductive pressure-sensitive adhesive tape according to the present invention at least has) side is exposed. The specimen has a size (area of exposed adhesive face) of preferably 100 cm².
Next, the specimen is placed in pure water at a temperature of 100°C, followed by boiling for 45 minutes to perform boiling extraction of acrylic acid ions and methacrylic acid ions to thereby give an extract.
Next, the total amount of acrylic acid ions and methacrylic acid ions in the extract is measured (in ng) through ion chromatography (ion chromatographic technique), from which the total amount of acrylic acid ions and methacrylic acid ions per unit area of the adhesive face (exposed adhesive face) of the specimen is calculated (in ng/cm²). Though not limited, the measurement through ion chromatography (ion chromatographic technique) may be performed under the following conditions.

### [Conditions for Ion Chromatographic Measurement]

Analyzer: DX-320 supplied by Dionex Corporation (now subsidiary of Thermo Fisher Scientific Inc.)
Separation column: Ion Pac AS15 (4 mm by 250 mm)
Guard column: Ion Pac AG15 (4 mm by 50 mm)
Suppressor: ASRS-ULTRA (external mode, 100 mA)
Detector: Electroconductivity detector
Eluent: 7 mM KOH (0 to 20 min.)
   45 mM KOH (20 to 30 min.)
   (using the Eluent Generator EG40)
Eluent flow rate: 1.0 ml/min.
Sample injection volume: 250 µl

Such (meth)acrylic acid ions liberated from the electroconductive pressure-sensitive adhesive tape by the action of water are generally derived from (meth)acrylic acid present in the acrylic pressure-sensitive adhesive layer. The (meth)acrylic acid ions cause corrosion of a metal (e.g., the metallic adherend or the metallic foil (electroconductive substrate)) and thereby impede electrical conduction. This is probably because the (meth)acrylic acid ions migrate into the metal by the action of water under hot and humid conditions and thereby impede conduction. For more satisfactory adhesiveness, an electroconductive pressure-sensitive adhesive tape may employ a large amount (e.g., 10 percent by weight or more) of (meth)acrylic acid (particularly, acrylic acid) as a monomer component constituting an acrylic polymer. In this case, generally, unreacted (meth)acrylic acid is liable to remain in the resulting acrylic pressure-sensitive adhesive layer, and thereby a larger amount of (meth)acrylic acid ions tends to be liberated from the electroconductive pressure-sensitive adhesive tape by the action of water. In contrast, according to the present invention, (meth)acrylic acid as a monomer component is used, if any, in a small amount, and thereby (meth)acrylic acid ions are liberated in a small amount from the electroconductive pressure-sensitive adhesive tape even by the action of water. Thus, the electroconductive pressure-sensitive adhesive tape according to the present invention less suffers from corrosion of the metallic adherend and the metallic foil (electroconductive substrate) and less suffers from change in electrical conductivity (resistance) caused by the liberated (meth)acrylic acid ions.

As is described above, the electroconductive pressure-sensitive adhesive tape according to the present invention has satisfactory electrical conductivity and is less corrosive (less causes corrosion). The electroconductive pressure-sensitive adhesive tape according to the present invention is advantageously used typically for electrical conduction between two points separated from each other; and for electromagnetic shielding of electric/electronic appliances and cables. Particularly, the electroconductive pressure-sensitive adhesive tape is less corrosive over the long term and is usable in applications requiring long-term stable electrical conductivity, which are typified by grounding of printed circuit boards; grounding of external shielding cases of electronic appliances; earthing for static protection; and internal wiring (interconnections) typically of power sources and electronic appliances.

The acrylic pressure-sensitive adhesive layer in the electroconductive pressure-sensitive adhesive tape according to the present invention is not limited, as long as being a pressure-sensitive adhesive layer containing, as a base polymer, an acrylic polymer formed from an acrylic monomer as an essential monomer component, which is typified by an acrylic pressure-sensitive adhesive layer in a embodiment of the electroconductive pressure-sensitive adhesive tape according to the present invention as mentioned below. Though not critical, the content of the acrylic polymer in the acrylic pressure-sensitive adhesive layer (100 percent by weight) is preferably 10 percent by weight or more (e.g., from 10 to 100 percent by weight), and more preferably from 20 to 99.999 percent by weight.

An acrylic pressure-sensitive adhesive for the formation of the acrylic pressure-sensitive adhesive layer may be in any form, which is exemplified by active-energy-ray-curable pressure-sensitive adhesives, solvent-borne (solution) pressure-sensitive adhesives, emulsion pressure-sensitive adhesives, and thermofusible pressure-sensitive adhesives (hot-melt pressure-sensitive adhesives).

Though not limited and varying depending on the process for the formation of the pressure-sensitive adhesive layer, the acrylic pressure-sensitive adhesive layer may be formed from an acrylic pressure-sensitive adhesive composition including an acrylic polymer as an essential component; or from an acrylic pressure-sensitive adhesive composition including, as an essential component, a mixture of monomers (hereinafter also referred to as a "monomer mixture") constituting an acrylic polymer, or a partial polymer of the monomer mixture. Though not limited, examples of the former include so-called solvent-borne pressure-sensitive adhesive compositions; and examples of the latter include so-called active-energy-ray-curable pressure-sensitive adhesive compositions. Where necessary, the pressure-sensitive adhesive compositions may further contain any of crosslinking agents and other additives.

As used herein the term "pressure-sensitive adhesive composition" also means and includes a "composition for the formation of a pressure-sensitive adhesive layer." Also as used herein the term "monomer mixture" refers to a mixture composed of a monomer component or components alone for constituting an acrylic polymer. The term "partial polymer" refers to a composition in which one or more of constitutional components of the monomer mixture have been partially polymerized.

When the electroconductive pressure-sensitive adhesive tape according to the present invention has a substrate, the substrate is not limited, but is preferably a metallic foil from the viewpoint of electrical conductivity. Exemplary materials for the metallic foil include, but are not limited to, copper, aluminum, nickel, silver, and iron, as well as alloys of them. Among them, the metallic foil is preferably made from aluminum or copper (aluminum foil or copper foil) from the viewpoints typically of cost and workability. The metallic foil may be one which has been undergone a surface treatment such as tin plating.

The electroconductive pressure-sensitive adhesive tape according to the present invention is not limited, as long as having at least one ply of the acrylic pressure-sensitive adhesive layer and having a volume resistance and an amount of extracted (meth)acrylic acid ions controlled within the above-specified ranges. The electroconductive pressure-sensitive adhesive tape according to the present invention has such a structure that a conduction path (path or channel through which a current flows) to control the volume resistance within the range is provided. Though not limited, examples of electroconductive pressure-sensitive adhesive tapes having this structure include after-mentioned "First Embodiment" and "Second Embodiment" of the electroconductive pressure-sensitive adhesive tape according to the present invention. An electroconductive pressure-sensitive adhesive tape according to "First Embodiment" of the present invention is an electroconductive pressure-sensitive adhesive tape having a metallic foil; and the acrylic pressure-sensitive adhesive layer present on one side of the metallic foil, in which the metallic foil has a conducting part penetrating the acrylic pressure-sensitive adhesive layer and having a terminal at the extremity thereof. This electroconductive pressure-sensitive adhesive tape is hereinafter also referred to as an "electroconductive pressure-sensitive adhesive tape T₁." An electroconductive pressure-sensitive adhesive tape according to "Second Embodiment" of the present invention is an electroconductive pressure-sensitive adhesive tape in which the acrylic pressure-sensitive adhesive layer contains an acrylic polymer; and an electroconductive filler in an amount of from 10 to 500 parts by weight relative to the total amount (100 parts by weight) of monomer component(s) constituting the acrylic polymer. This electroconductive pressure-sensitive adhesive tape is hereinafter also referred to as an "electroconductive pressure-sensitive adhesive tape T₂." These electroconductive pressure-sensitive adhesive tapes according to the embodiments of the present invention will be illustrated in detail below, with reference to the attached drawings according to necessity. It should be noted, however, that these embodiments are never construed to limit the scope of the present invention.

### [Electroconductive Pressure-sensitive Adhesive Tape T₁ (First Embodiment)]

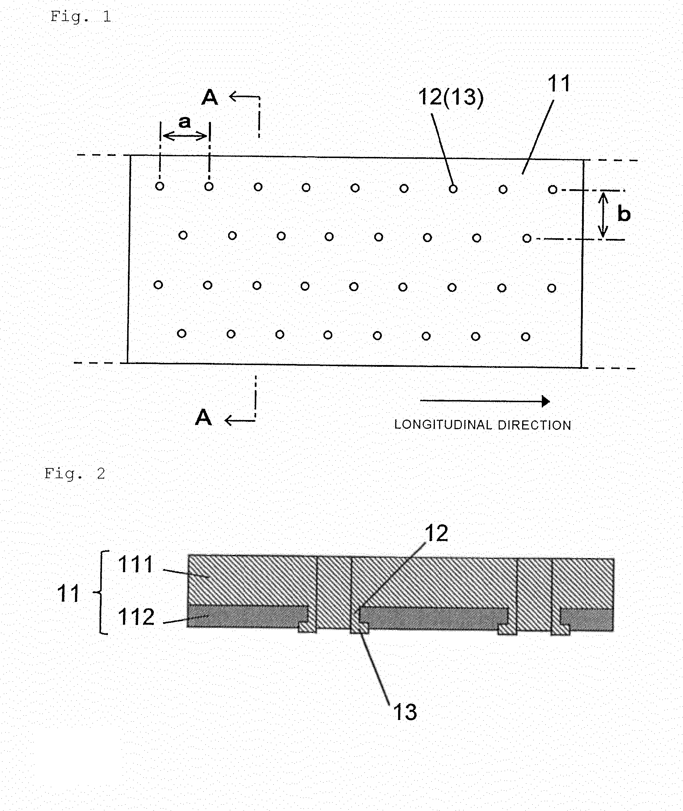

The electroconductive pressure-sensitive adhesive tape according to First Embodiment of the present invention (electroconductive pressure-sensitive adhesive tape T₁) is a single-sided pressure-sensitive adhesive tape which structurally includes a metallic foil and an acrylic pressure-sensitive adhesive layer present on one side of the metallic foil, in which the metallic foil has a conducting part penetrating the acrylic pressure-sensitive adhesive layer and having a terminal at the extremity thereof. The presence of the conducting part ensures electrical conductivity (electrical conductivity in the thickness direction) between the metallic foil and the side of the acrylic pressure-sensitive adhesive layer to which the adherend is to be affixed. Fig. 1 and Fig. 2 are schematic views schematically illustrating the electroconductive pressure-sensitive adhesive tape T₁. In Fig. 1 (plan view of the electroconductive pressure-sensitive adhesive tape T₁), the reference sign 11 stands for an electroconductive pressure-sensitive adhesive tape T₁; and 12 stands for a conducting part. The conducting part 12 has a terminal 13 at the extremity thereof. A plurality of the conducting part 12 (terminal 13) is arranged in a positional pattern of so-called scatter pattern. An exemplary positional pattern usable herein is one illustrated in Fig. 1, in which conductive parts 12 (terminals 13) are arranged at a pitch "a" in the longitudinal direction to form a row, and rows of the conductive parts 12 are arranged at a spacing of "b," where the positions of conductive parts in one row are deviated from the positions of conductive parts in another adjacent row by half the pitch "a," and the pitch "a" is set to be substantially equal to the spacing "b." Fig. 2 is a cross-sectional view of the electroconductive pressure-sensitive adhesive tape T₁ taken along line A-A of Fig. 1. In this embodiment, the electroconductive pressure-sensitive adhesive tape T₁ 11 structurally has a metallic foil 111 and, on one side thereof, an acrylic pressure-sensitive adhesive layer 112, in which the metallic foil 111 bears conducting parts 12 each penetrating the acrylic pressure-sensitive adhesive layer 112 and each having a terminal 13 at the extremity thereof.

### (Metallic Foil)

The metallic foil is not limited, as long as being a metallic foil having self-supporting properties and having electrical conductivity, which is typified by metallic foils of copper, aluminum, nickel, silver, iron, lead, and alloys of them. Among them, aluminum foil and copper foil are preferred from the viewpoints of cost and workability. The metallic foil may be one which has undergone a surface treatment such as tin plating. The thickness of the metallic foil is not limited, may be chosen within the range of from about 5 to about 500 µm, but is preferably from 8 to 200 µm, and more preferably from 10 to 150 µm from the viewpoint of balance between strength and flexibility.

### (Acrylic Pressure-sensitive Adhesive Layer)

The acrylic pressure-sensitive adhesive layer is a pressure-sensitive adhesive layer which contains an acrylic polymer as a base polymer, which acrylic polymer is formed from an acrylic monomer as an essential monomer component. Though not critical, the content of the acrylic polymer in the acrylic pressure-sensitive adhesive layer (100 percent by weight) is preferably 60 percent by weight or more (e.g., from 60 to 100 percent by weight), and more preferably from 65 to 99.999 percent by weight.

The acrylic polymer is preferably an acrylic polymer which is formed from a (meth)acrylic alkyl ester whose alkyl moiety being a linear or branched-chain alkyl group as an essential monomer component. The term "(meth)acrylic" refers to "acrylic" and/or "methacrylic," and the same is true for other descriptions.

Examples of the (meth)acrylic alkyl ester whose alkyl moiety being a linear or branched-chain alkyl group (hereinafter also simply referred to as "alkyl (meth)acrylate") include alkyl (meth)acrylates whose alkyl moiety having 1 to 20 carbon atoms, such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Among them, alkyl (meth)acrylates whose alkyl moiety having 1 to 10 carbon atoms are preferred, of which 2-ethylhexyl acrylate (2EHA), butyl acrylate (BA), ethyl acrylate (EA), and methyl methacrylate (MMA) are more preferred. Each of the alkyl (meth)acrylates may be used alone or in combination.

The content of the alkyl (meth)acrylate is preferably from 50 to 100 percent by weight, and more preferably from 60 to 99.9 percent by weight, based on the total amount (100 percent by weight) of monomer component(s) constituting the acrylic polymer.

The monomer component(s) constituting the acrylic polymer may further include any of polar-group-containing monomers, multifunctional monomers, and other copolymerizable monomers as copolymerizable monomer components. These copolymerizable monomer components, when used, help the acrylic pressure-sensitive adhesive layer to have a higher bond strength to the adherend or to have a higher cohesive force. Each of different copolymerizable monomer components may be used alone or in combination.

Examples of the polar-group-containing monomers include carboxyl-containing monomers such as acrylic acid (AA), methacrylic acid, itaconic acid, maleic acid, fumaric acid, and crotonic acid, as well as acid anhydride-containing monomers such as maleic anhydride and itaconic anhydride; hydroxyl-containing monomers including hydroxylalkyl (meth)acrylates such as 2-hydroxyethyl (meth)acrylate, 3-hydroxypropyl (meth)acrylate, 4-hydroxybutyl (meth)acrylate, and 6-hydroxyhexyl (meth)acrylate, as well as vinyl alcohol and allyl alcohol; amido-containing monomers such as (meth)acrylamide, N,N-dimethyl(meth)acrylamide, N-methylol(meth)acrylamide, N-methoxymethyl(meth)acrylamide, N-butoxymethyl(meth)acrylamide, and N-hydroxyethylacrylamide; amino-containing monomers such as aminoethyl (meth)acrylate, dimethylaminoethyl (meth)acrylate, and t-butylaminoethyl (meth)acrylate; glycidyl-containing monomers such as glycidyl (meth)acrylate and methylglycidyl (meth)acrylate; cyano-containing monomers such as acrylonitrile and methacrylonitrile; heterocycle-containing vinyl monomers such as N-vinyl-2-pyrrolidone, (meth)acryloylmorpholine, as well as N-vinylpyridine, N-vinylpiperidone, N-vinylpyrimidine, N-vinylpiperazine, N-vinylpyrrole, N-vinylimidazole, and N-vinyloxazole; alkoxyalkyl (meth)acrylate monomers such as methoxyethyl (meth)acrylate and ethoxyethyl (meth)acrylate; sulfo-containing monomers such as sodium vinylsulfonate; phosphate-containing monomers such as 2-hydroxyethylacryloyl phosphate; imido-containing monomers such as cyclohexylmaleimide and isopropylmaleimide; and isocyanate-containing monomers such as 2-methacryloyloxyethyl isocyanate. Among them, carboxyl-containing monomers and hydroxyl-containing monomers are preferred as the polar-group-containing monomer, of which acrylic acid (AA) and 2-hydroxyethyl acrylate (HEA) are more preferred, for more satisfactory adhesiveness. Each of different polar-group-containing monomers may be used alone or in combination.

The content of the polar-group-containing monomer is preferably from 0 to 30 percent by weight, and more preferably from 0 to 20 percent by weight, based on the total amount (100 percent by weight) of monomer component(s) constituting the acrylic polymer. The polar-group-containing monomer, if contained in a content of more than 30 percent by weight, may cause the acrylic pressure-sensitive adhesive layer to have excessively high cohesive force to thereby have insufficient tackiness.

In particular, when the monomer components constituting the acrylic polymer include (meth)acrylic acid, the total content of (meth)acrylic acid is preferably 10 percent by weight or less (e.g., from 0 to 10 percent by weight), more preferably from 0 to 5 percent by weight, and furthermore preferably from 0 to 3 percent by weight, based on the total amount (100 percent by weight) of monomer components constituting the acrylic polymer. If the content of (meth)acrylic acid is more than 10 percent by weight, the total amount of acrylic acid ions and methacrylic acid ions extracted from the pressure-sensitive adhesive sheet according to the present invention with pure water under conditions of 100°C for 45 minutes may not be controlled to 20 ng/cm² or less.

Examples of the multifunctional monomers include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, and urethane acrylates.

The content of the multifunctional monomer is preferably 0.5 percent by weight or less (e.g., from 0 to 0.5 percent by weight), and more preferably from 0 to 0.3 percent by weight, based on the total amount (100 percent by weight) of monomer component(s) constituting the acrylic polymer. The multifunctional monomer, if contained in a content of more than 0.5 percent by weight, may cause the acrylic pressure-sensitive adhesive layer to have excessively high cohesive force to thereby have insufficient tackiness. When a crosslinking agent is employed, such a multifunctional monomer does not have to be used. However, when a crosslinking agent is not employed, the multifunctional monomer is used in a content of preferably from 0.001 to 0.5 percent by weight, and more preferably from 0.002 to 0.1 percent by weight.

The other copolymerizable monomers than the polar-group-containing monomers and the multifunctional monomers include (meth)acrylic esters each having an alicyclic hydrocarbon group, such as cyclopentyl (meth)acrylate, cyclohexyl (meth)acrylate, and isobornyl (meth)acrylate; (meth)acrylic aryl esters such as phenyl (meth)acrylate; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as vinyl alkyl ethers; and vinyl chloride.

The acrylic polymer may be prepared through polymerization of the monomer components according to a known or customary polymerization technique. Exemplary polymerization techniques for the acrylic polymer include solution polymerization, emulsion polymerization, bulk polymerization, and polymerization upon irradiation with an active energy ray (polymerization with an active energy ray). Among them, solution polymerization and polymerization with an active energy ray are preferred for satisfactory transparency and water resistance, of which solution polymerization is more preferred from the viewpoint of cost.

The solution polymerization may employ any of regular solvents of various kinds. Exemplary solvents for use herein include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. Each of different solvents may be used alone or in combination.

Exemplary active energy rays to be applied upon the polymerization with an active energy ray (photopolymerization) include ionizing radiation such as alpha rays, beta rays, gamma rays, neutron beams, and electron beams; and ultraviolet rays, of which ultraviolet rays are particularly preferred. Irradiation conditions of the active energy ray, such as irradiation energy, irradiation time, and irradiation procedure, are not limited, as long as a photoinitiator is activated to cause a reaction of monomer components.

The preparation of the acrylic polymer may employ a polymerization initiator such as a thermal initiator or a photopolymerization initiator (photoinitiator) according to the type of the polymerization reaction. Each of different polymerization initiators may be used alone or in combination.

The thermal initiator is not limited, and preferred examples thereof include oil-soluble polymerization initiators including azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl-2,2'-azobis(2-methyl propionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane. Each of different thermal initiators may be used alone or in combination. Though not critical, the thermal initiator may be used in an amount typically in the range of from about 0.01 to about 1 part by weight, relative to the total amount (100 parts by weight) of monomer component(s) constituting the acrylic polymer.

Examples of the photoinitiator usable herein include, but are not limited, benzoin ether photoinitiators, acetophenone photoinitiators, α-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators. Exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Exemplary α-ketol photoinitiators include 2-methyl-2-hydroxypropiophenone and 1-[4-(2-hydroxyethyl)phenyl]-2-methylpropan-1-one. Examples of the aromatic sulfonyl chloride photoinitiators include 2-naphthalenesulfonyl chloride. Exemplary photoactive oxime photoinitiators include 1-phenyl-1,1-propanedione-2-(o-ethoxycarbonyl)-oxime. The benzoin photoinitiators include, for example, benzoin. Exemplary benzil photoinitiators include benzil. Exemplary benzophenone photoinitiators include benzophenone, benzoylbenzoic acid, 3,3'-dimethyl-4-methoxybenzophenone, polyvinylbenzophenone, and α-hydroxycyclohexyl phenyl ketone. Exemplary ketal photoinitiators include benzyl dimethyl ketal. The thioxanthone photoinitiators include, for example, thioxanthone, 2-chlorothioxanthone, 2-methylthioxanthone, 2,4-dimethylthioxanthone, isopropylthioxanthone, 2,4-diisopropylthioxanthone, and dodecylthioxanthone. Though not critical, the photoinitiator is used in an amount of preferably from 0.01 to 0.2 part by weight, and more preferably from 0.05 to 0.15 part by weight, relative to the total amount (100 parts by weight) of monomer component(s) constituting the acrylic polymer.

The acrylic polymer has a weight-average molecular weight of preferably from 30x 10⁴ to 120x 10⁴, more preferably from 35x 10⁴ to 100x 10⁴, and furthermore preferably from 40x 10⁴ to 90x 10⁴. The acrylic polymer, if having a weight-average molecular weight of less than 30x 10⁴, may not exhibit good adhesive properties; and in contrast, if having a weight-average molecular weight of more than 120x 10⁴, may cause a problem in coatability. The weight-average molecular weight may be controlled typically by the type and amount of the polymerization initiator; and the temperature, time, monomer concentrations, and monomer dropping rates upon polymerization.

The pressure-sensitive adhesive composition for the formation of the acrylic pressure-sensitive adhesive layer of the electroconductive pressure-sensitive adhesive tape T₁ may employ any of known additives according to necessity, within ranges not adversely affecting characteristic properties obtained according to the present invention. Exemplary additives include crosslinking agents, crosslinking promoters, tackifier resins (e.g., rosin derivatives, polyterpene resins, petroleum resins, and oil-soluble phenols), age inhibitors, fillers, colorants (e.g., pigments and dyestuffs), ultraviolet absorbers, antioxidants, chain-transfer agents, plasticizers, softeners, surfactants, and antistatic agents. The formation of the acrylic pressure-sensitive adhesive layer may employ any of common solvents. The solvents for use herein is not limited in type and may be those listed as the solvent for use in the solution polymerization.

The crosslinking agent crosslinks the base polymer (acrylic polymer) in the acrylic pressure-sensitive adhesive layer and thereby allows the acrylic pressure-sensitive adhesive layer to have further higher cohesive force and control the gel fraction of the acrylic pressure-sensitive adhesive layer. The crosslinking agent for use herein is not limited and may be suitably chosen from among known or customary ones. Specifically, preferred examples of crosslinking agents usable herein include multifunctional melamine compounds (melamine crosslinking agents), multifunctional epoxy compounds (epoxy crosslinking agents), and multifunctional isocyanate compounds (isocyanate crosslinking agents). Among them, isocyanate crosslinking agents and epoxy crosslinking agents are preferred, of which isocyanate crosslinking agents are more preferred. Each of different crosslinking agents may be used alone or in combination.

Example of the isocyanate crosslinking agents include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; aromatic polyisocyanates such as 2,4-tolylene diisocyanate, 2,6-tolylene diisocyanate, 4,4'-diphenylmethane diisocyanate, and xylylene diisocyanate; as well as an adduct of tolylene diisocyanate with trimethylolpropane [trade name "CORONATE L" supplied by Nippon Polyurethane Industry Co., Ltd.] and an adduct of hexamethylene diisocyanate with trimethylolpropane [trade name "CORONATE HL" supplied by Nippon Polyurethane Industry Co., Ltd.].

The epoxy crosslinking agents include, for example, N,N,N',N`-tetraglycidyl-m-xylenediamine, diglycidylaniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ethers, glycerol polyglycidyl ethers, pentaerythritol polyglycidyl ethers, polyglycerol polyglycidyl ethers, sorbitan polyglycidyl ethers, trimethylolpropane polyglycidyl ethers, diglycidyl adipate, diglycidyl o-phthalate, triglycidyl-tris(2-hydroxyethyl) isocyanurate, resorcinol diglycidyl ether, bisphenol-S diglycidyl ether, and epoxy resins each having two or more epoxy groups per one molecule. Exemplary commercial products usable as epoxy crosslinking agents include a product under the trade name "TETRAD C" supplied by Mitsubishi Gas Chemical Company, Inc.

The content of the crosslinking agent in the pressure-sensitive adhesive composition is, though not critical, preferably from 0 to 10 parts by weight, and more preferably from 0 to 5 parts by weight, relative to the total amount (100 parts by weight) of monomer component(s) constituting the acrylic polymer.

Though not critical, the acrylic pressure-sensitive adhesive layer has a thickness of preferably from 5 to 120 µm, and more preferably from 10 to 90 µm. The acrylic pressure-sensitive adhesive layer, if having a thickness of more than 120 µm, may be disadvantageous for reduction in thickness of products or may impede the formation of terminals. The acrylic pressure-sensitive adhesive layer, if having a thickness of less than 5 µm, may fail to disperse stress due to its excessively small thickness and may be susceptible to separation.

A process for the formation of the acrylic pressure-sensitive adhesive layer may be any of known or customary processes for forming pressure-sensitive adhesive layers, may vary depending on the polymerization technique of the acrylic polymer, and is not limited. Exemplary processes include the following processes (1) to (3). (1) The process for forming an acrylic pressure-sensitive adhesive layer by applying a composition to a separator or metallic foil; and irradiating the applied composition with an active energy ray (of which an ultraviolet ray is preferred) to form the acrylic pressure-sensitive adhesive layer, in which the composition includes a mixture of monomer components constituting an acrylic polymer (monomer mixture) or a partial polymer of the monomer mixture and, according to necessity, additives such as a photoinitiator and/or a crosslinking agent. (2) The process for forming an acrylic pressure-sensitive adhesive layer by applying a composition (solution) to a separator or metallic foil; and drying and/or curing the applied composition to form the acrylic pressure-sensitive adhesive layer, which composition includes an acrylic polymer, a solvent, and, according to necessity, additives such as a crosslinking agent. (3) The process for forming an acrylic pressure-sensitive adhesive layer by further drying the acrylic pressure-sensitive adhesive layer formed in the process (1).

The coating (application) in the process for the formation of the acrylic pressure-sensitive adhesive layer may employ a known coating technique and may use any of customary coaters such as gravure roll coater, reverse roll coater, kiss-contact roll coater, dip roll coater, bar coater, knife coater, spray coater, comma coater, and direct coater.

The electroconductive pressure-sensitive adhesive tape T₁ may further have any of other layers (e.g., an intermediate layer and an under coat layer), in addition to the metallic foil and the acrylic pressure-sensitive adhesive layer, within ranges not adversely affecting the advantageous effects of the present invention.

Though not critical, the thickness of the electroconductive pressure-sensitive adhesive tape T₁ is preferably from 25 to 200 µm, and more preferably from 40 to 140 µm. The electroconductive pressure-sensitive adhesive tape T₁, if having a thickness of more than 200 µm, may be disadvantageous for reduction in thickness of products. The electroconductive pressure-sensitive adhesive tape T₁, if having a thickness of less than 25 µm, may have insufficient workability. As used herein the term "thickness of the electroconductive pressure-sensitive adhesive tape T₁" refers to a thickness from the surface of the metallic foil where the acrylic pressure-sensitive adhesive layer is not present to the surface of the acrylic pressure-sensitive adhesive layer.

A separator (release liner) may be provided on the surface (adhesive face) of the pressure-sensitive adhesive layer in the electroconductive pressure-sensitive adhesive tape T₁ before use. The separator is used as a protector for the acrylic pressure-sensitive adhesive layer and will be removed when the layer is applied to an adherend. The separator is not indispensable. The separator may for example be a customary release paper, is not limited, but is typified by bases having a layer undergone a surface release treatment; low-adhesive bases formed from fluorine-containing polymers; and low-adhesive bases formed from nonpolar polymers. Examples of the bases having a layer undergone a surface release treatment include plastic films and papers whose surface has been treated with any of release agents such as silicone release agents, long-chain alkyl release agents, fluorine-containing release agents, and molybdenum sulfide. The fluorine-containing polymers include polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers. Examples of the nonpolar polymers include olefinic resins such as polyethylenes and polypropylenes. Among them, a separator formed from a polyethylene or polypropylene is preferably used so as to suppress a gap of the separator. The separator may be formed according to a known or customary technique. The separator is not limited typically in thickness.

Though not limited, the electroconductive pressure-sensitive adhesive tape T₁ may be produced by forming an acrylic pressure-sensitive adhesive layer on one side of a metallic foil; and subsequently exposing multiple points of the metallic foil from the surface of the acrylic pressure-sensitive adhesive layer through bottomless drawing to form terminals. Specifically, the electroconductive pressure-sensitive adhesive tape T₁ may be produced typically by the methods described in Japanese Examined Utility Model Registration Publication No. S63-46980 and Japanese Unexamined Patent Application Publication No. H08-185714. An example of such production methods will be illustrated with reference to Fig. 2. Initially, an acrylic pressure-sensitive adhesive layer 112 is formed on a surface of a metallic foil 111 according to the aforementioned process for the formation of the acrylic pressure-sensitive adhesive layer. In this process, the acrylic pressure-sensitive adhesive layer 112 may be formed by a direct process in which the layer is formed directly on the surface of the metallic foil 111; or may be formed by a transfer process in which an acrylic pressure-sensitive adhesive layer 112 is once formed on a separator, and the formed layer is transferred (applied) to the metallic foil 111 to form the acrylic pressure-sensitive adhesive layer 112 on the metallic foil 111. Next, where necessary, a separator (process separator) is applied to the surface of the acrylic pressure-sensitive adhesive layer 112 to protect the acrylic pressure-sensitive adhesive layer 112. The metallic foil 111 is then drawn into a bottomless cylindrical shape using a punch-shaped positive die and a corresponding negative die to form a conducting part 12. Next, the extremity of the cylindrical portion is bent outward horizontally by pressing to form a flange-shaped terminal 13. Thus, the electroconductive pressure-sensitive adhesive tape T₁ 11 is produced. In general, a plurality of the conducting part 12 (terminal 13) is formed at a suitable spacing as typically in the scatter pattern illustrated in Fig. 1.

### [Electroconductive Pressure-sensitive Adhesive Tape T₂ (Second Embodiment)]

The electroconductive pressure-sensitive adhesive tape according to Second Embodiment of the present invention (electroconductive pressure-sensitive adhesive tape T₂) is an electroconductive pressure-sensitive adhesive tape having at least one acrylic pressure-sensitive adhesive layer with electrical conductivity. The electroconductive pressure-sensitive adhesive tape T₂ may be a double-sided pressure-sensitive adhesive tape or a single-sided pressure-sensitive adhesive tape.

The electroconductive pressure-sensitive adhesive tape T₂ may be a substrate-less electroconductive pressure-sensitive adhesive tape having no substrate (substrate layer) or may be a substrate-supported electroconductive pressure-sensitive adhesive tape having a substrate. Examples of the substrate-less electroconductive pressure-sensitive adhesive tape include double-sided pressure-sensitive adhesive tapes each composed of the acrylic pressure-sensitive adhesive layer alone. Exemplary substrate-supported electroconductive pressure-sensitive adhesive tapes include pressure-sensitive adhesive tapes each having a substrate and, at least on one side thereof, the acrylic pressure-sensitive adhesive layer, such as single-sided pressure-sensitive adhesive tapes each having a substrate and, on one side thereof, the acrylic pressure-sensitive adhesive layer; and double-sided pressure-sensitive adhesive tapes each having a substrate and, on both sides thereof, the acrylic pressure-sensitive adhesive layer. Among them, preferred from the viewpoint of electrical conductivity are electroconductive pressure-sensitive adhesive tapes each having a metallic foil as the substrate (namely, electroconductive pressure-sensitive adhesive tapes having a metallic foil and, on at least one side thereof, the acrylic pressure-sensitive adhesive layer). Of them, electroconductive pressure-sensitive adhesive tapes having a metallic foil and, on one side thereof, the acrylic pressure-sensitive adhesive layer (single-sided pressure-sensitive adhesive tapes) are more preferred. The "substrate (substrate layer)" as used herein does not include a separator which will be removed upon use (application) of the electroconductive pressure-sensitive adhesive tape.

### (Acrylic Pressure-sensitive Adhesive Layer)

The acrylic pressure-sensitive adhesive layer is a pressure-sensitive adhesive layer which contains, as a base polymer, an acrylic polymer derived from an acrylic monomer as an essential monomer component and which further contains an electroconductive filler. The electroconductive filler, when contained, forms a conduction path in the acrylic pressure-sensitive adhesive layer and imparts electrical conductivity thereto. Though not critical, the content of the acrylic polymer in the acrylic pressure-sensitive adhesive layer (100 percent by weight) is preferably 10 percent by weight or more (e.g., from 10 to 95 percent by weight), and more preferably from 20 to 80 percent by weight.

The acrylic polymer is preferably any of the acrylic polymers exemplified in [Electroconductive Pressure-sensitive Adhesive Tape T₁ (First Embodiment)].

The electroconductive filler may be any of known or customary ones, which are typified by fillers made from metals such as nickel, iron, chromium, cobalt, aluminum, antimony, molybdenum, copper, silver, platinum, and gold, alloys or oxides of these metals, and carbon materials such as carbon black; and fillers including, for example, polymer beads or resins coated with these. Among them, metal fillers and/or metal-coated fillers are preferred.

The electroconductive filler is not limited in its shape but preferably has a spheroidal and/or spike-like shape, and more preferably has a spheroidal shape. A spheroidal and/ spike-like electroconductive filler, when used, is readily dispersible in the acrylic pressure-sensitive adhesive layer and may allow the electroconductive pressure-sensitive adhesive tape to have both a suitable tackiness and satisfactory electrical conductivity. A filament-like, flake-like, or resinoid filler may have poor dispersibility to form coarse aggregates or may be aligned in the acrylic pressure-sensitive adhesive layer in a direction in parallel with the adhesive face to impede sufficient electrical conductivity in the thickness direction of the acrylic pressure-sensitive adhesive layer. This may cause the acrylic pressure-sensitive adhesive layer to fail to have both a suitable tackiness and satisfactory electrical conductivity and may cause the acrylic pressure-sensitive adhesive layer to have a poor appearance. Though not critical, the electroconductive filler has an aspect ratio of preferably from 1.0 to 2.0, and more preferably from 1.0 to 1.5. The aspect ratio may be measured typically with a scanning electron microscope (SEM).

The content of the electroconductive filler in the acrylic pressure-sensitive adhesive layer is preferably from 10 to 500 parts by weight, and more preferably from 20 to 400 parts by weight, relative to the total amount (100 parts by weight) of monomer component(s) constituting the acrylic polymer. The electroconductive filler, if contained in a content of more than 500 parts by weight, may aggregate with each other or may cause a rough adhesive face, may thereby invite insufficient tackiness and/or poor appearance, and may be disadvantageous in cost. In contrast, the electroconductive filler, if contained in a content of less than 10 parts by weight, may cause insufficient electrical conductivity.

A pressure-sensitive adhesive composition for the formation of the acrylic pressure-sensitive adhesive layer of the electroconductive pressure-sensitive adhesive tape T₂ may employ any of known additives according to necessity within ranges not adversely affecting the characteristic properties obtained according to the present invention. Exemplary additives include crosslinking agents, crosslinking promoters, tackifier resins (e.g., rosin derivatives, polyterpene resins, petroleum resins, and oil-soluble phenols), age inhibitors, fillers, colorants (e.g., pigments and dyestuffs), ultraviolet absorbers, antioxidants, chain-transfer agents, plasticizers, softeners, surfactants, and antistatic agents. The formation of the acrylic pressure-sensitive adhesive layer may employ any of regular solvents. The solvents for use herein are not limited in type and are typified by those listed as the solvent for solution polymerization in the description of [Electroconductive Pressure-sensitive Adhesive Tape T₁ (First Embodiment)].

Examples of the crosslinking agents include the crosslinking agents exemplified in the description of [Electroconductive Pressure-sensitive Adhesive Tape T₁ (First Embodiment)]. Among them, isocyanate crosslinking agents and epoxy crosslinking agents are preferred, of which isocyanate crosslinking agents are more preferred. Though not critical, the content of the crosslinking agent in the pressure-sensitive adhesive composition is preferably from 0 to 10 parts by weight, and more preferably from 0 to 5 parts by weight, relative to the total amount (100 parts by weight) of monomer component(s) constituting the acrylic polymer.

Though not critical, the acrylic pressure-sensitive adhesive layer has a thickness of preferably from 5 to 120 µm, and more preferably from 10 to 90 µm. The acrylic pressure-sensitive adhesive layer, if having a thickness of more than 120 µm, may be disadvantageous for reduction in thickness of products or may impede the formation of terminals. The acrylic pressure-sensitive adhesive layer, if having a thickness of less than 5 µm, may fail to disperse stress due to its excessively small thickness, and may thereby be susceptible to separation or have insufficient tackiness.

A process for the formation of the acrylic pressure-sensitive adhesive layer may be any of known or customary processes for forming pressure-sensitive adhesive layers, may vary depending on the polymerization technique of the acrylic polymer, and is not limited. Exemplary processes include the following processes (1) to (3). (1) The process for forming an acrylic pressure-sensitive adhesive layer, by applying a composition to a substrate or separator; and irradiating the applied composition with an active energy ray (of which an ultraviolet ray is preferred) to form the acrylic pressure-sensitive adhesive layer, where the composition includes a mixture of monomer components constituting an acrylic polymer (monomer mixture) or a partial polymer of the monomer mixture, an electroconductive filler, and, according to necessity, additives such as a photoinitiator and a crosslinking agent. (2) The process for forming an acrylic pressure-sensitive adhesive layer, by applying a composition (solution) to a substrate or separator; and drying and/or curing the applied composition to form the acrylic pressure-sensitive adhesive layer thereon, where the composition includes an acrylic polymer, an electroconductive filler, a solvent, and, according to necessity, additives such as a crosslinking agent. (3) The process of forming an acrylic pressure-sensitive adhesive layer by further drying the acrylic pressure-sensitive adhesive layer formed in the process (1).

The coating in the formation processes of the acrylic pressure-sensitive adhesive layer may employ any of known coating procedures and may use, for example, any of the coaters exemplified in the description of [Electroconductive Pressure-sensitive Adhesive Tape T₁ (First Embodiments.

### (Substrate)

When the electroconductive pressure-sensitive adhesive tape T₂ has a substrate, the substrate is preferably, but is not limited to, a metallic foil from the viewpoint of electrical conductivity. Materials for the metallic foil include, but are not limited to, copper, aluminum, nickel, silver, iron, and alloys of them. Among them, aluminum foil and copper foil are preferred from the viewpoints of cost and workability.

The substrate has a thickness of preferably from 10 to 100 µm, and more preferably from 15 to 75 µm, from the viewpoints typically of weight reduction, thickness reduction, cost, and bump-absorptivity.

In addition to the acrylic pressure-sensitive adhesive layer and the substrate, the electroconductive pressure-sensitive adhesive tape T₂ may have any of other layers (e.g., an intermediate layer and an under coat) within a range not adversely affecting the advantageous effects of the present invention.

Though not critical, the electroconductive pressure-sensitive adhesive tape T₂ has a thickness of preferably from 20 to 200 µm, and more preferably from 25 to 140 µm. The electroconductive pressure-sensitive adhesive tape T₂, if having a thickness of more than 200 µm, may be disadvantageous for reduction in thickness of products. The electroconductive pressure-sensitive adhesive tape T₂, if having a thickness of less than 20 µm, may become susceptible to separation or may have insufficient tackiness.

A separator may be provided on the surface (adhesive face) of the pressure-sensitive adhesive layer of the electroconductive pressure-sensitive adhesive tape T₂ before use. The separator is used as a protector for the acrylic pressure-sensitive adhesive layer and will be removed when the tape is applied to an adherend. The separator is not indispensable. Examples of the separator include the separators exemplified in the description of [Electroconductive Pressure-sensitive Adhesive Tape T₁ (First Embodiment)]. The separator may be formed according to a known or customary procedure and is not limited typically in thickness.

The electroconductive pressure-sensitive adhesive tape T₂ may be produced according to a known or customary production method. Typically, when the electroconductive pressure-sensitive adhesive tape T₂ has no substrate, the tape may be produced by forming the acrylic pressure-sensitive adhesive layer on a separator. Independently, when the electroconductive pressure-sensitive adhesive tape T₂ has a substrate (preferably, metallic foil), the tape may be produced, for example, by a direct process in which the acrylic pressure-sensitive adhesive layer is formed directly on a surface of the substrate; or by a transfer process in which the acrylic pressure-sensitive adhesive layer is once formed on a separator, and the formed layer is transferred (applied) to the substrate to thereby form the acrylic pressure-sensitive adhesive layer on the substrate.

### EXAMPLES

The present invention will be illustrated in further detail with reference to several working examples below. It should be noted, however, that these examples are never construed to limit the scope of the present invention. Electroconductive pressure-sensitive adhesive tapes obtained in Examples 1 to 4 below each have the same configuration as in the "electroconductive pressure-sensitive adhesive tape T₁" (First Embodiment); whereas electroconductive pressure-sensitive adhesive tapes obtained in Examples 5 to 8 each have the same configuration as in the "electroconductive pressure-sensitive adhesive tape T₂" (Second Embodiment).

### Production Example of Acrylic Polymer A

A monomer mixture was prepared by mixing 70 parts by weight of 2-ethylhexyl acrylate (2EHA), 30 parts by weight of n-butyl acrylate (BA), and 3 parts by weight of acrylic acid (AA). In a separable flask were placed 100 parts by weight of the monomer mixture, 0.2 part by weight of 2,2'-azobisisobutyronitrile (AIBN) as a polymerization initiator, and 186 parts by weight of ethyl acetate as a polymerization solvent, followed by stirring for one hour while introducing nitrogen gas. After removing oxygen in the polymerization system in the above manner, the mixture was raised in temperature to 63°C, followed by a reaction for 10 hours. The reaction mixture was diluted with toluene to regulate its concentration, and thereby yielded an acrylic polymer solution (hereinafter also referred to as "acrylic polymer solution A") having a solids concentration of 30 percent by weight. An acrylic polymer (hereinafter also referred to as "acrylic polymer A") in the acrylic polymer solution A had a weight-average molecular weight of 52x 10⁴.

### Production Example of Acrylic Polymer B

An acrylic polymer solution (hereinafter also referred to as "acrylic polymer solution B") was obtained by the procedure of Production Example of Acrylic Polymer A, except for using, instead of the monomer mixture, a monomer mixture of 98 parts by weight of 2EHA and 2 parts by weight of AA. An acrylic polymer (hereinafter also referred to as "acrylic polymer B") in the acrylic polymer solution B had a weight-average molecular weight of 60x 10⁴.

### Production Example of Acrylic Polymer C

An acrylic polymer solution (hereinafter also referred to as "acrylic polymer solution C") was obtained by the procedure of Production Example of Acrylic Polymer A, except for using, instead of the monomer mixture, a monomer mixture of 46 parts by weight of 2EHA, 46 parts by weight of ethyl acrylate (EA), 4.5 parts by weight of methyl methacrylate (MMA), and 3.5 parts by weight of 2-hydroxyethyl acrylate (HEA). An acrylic polymer (hereinafter also referred to as "acrylic polymer C") in the acrylic polymer solution C had a weight-average molecular weight of 55x 10⁴.

### Production Example of Acrylic Polymer D

An acrylic polymer solution (hereinafter also referred to as "acrylic polymer solution D") was obtained by the procedure of Production Example of Acrylic Polymer A, except for using, instead of the monomer mixture, a monomer mixture of 80 parts by weight of 2EHA and 20 parts by weight of AA. An acrylic polymer (hereinafter also referred to as "acrylic polymer D") in the acrylic polymer solution D had a weight-average molecular weight of 80x 10⁴.

### Production Example of Acrylic Polymer E

An acrylic polymer solution (hereinafter also referred to as "acrylic polymer solution E") was obtained by the procedure of Production Example of Acrylic Polymer A, except for using, instead of the monomer mixture, a monomer mixture of 90 parts by weight of 2EHA and 10 parts by weight of AA. An acrylic polymer (hereinafter also referred to as "acrylic polymer E") in the acrylic polymer solution E had a weight-average molecular weight of 75x 10⁴.

### Production Example of Acrylic Polymer F

An acrylic polymer solution (hereinafter also referred to as "acrylic polymer solution F") was obtained by the procedure of Production Example of Acrylic Polymer A, except for using, instead of the monomer mixture, 95 parts by weight of BA and 5 parts by weight of AA. An acrylic polymer (hereinafter also referred to as "acrylic polymer F") in the acrylic polymer solution F had a weight-average molecular weight of 90x 10⁴.

### Example 1

A pressure-sensitive adhesive composition solution was prepared by adding a crosslinking agent "CORONATE L" (supplied by Nippon Polyurethane Industry Co., Ltd., isocyanate crosslinking agent) to the acrylic polymer solution A in an amount of 2 parts by weight per 100 parts by weight of the acrylic polymer A. The blending quantity (added amount) of CORONATE L is indicated by the added amount in terms of solids content (parts by weight), and the same is true for the following descriptions.
The above-prepared pressure-sensitive adhesive composition solution was applied onto a 163-µm thick release paper (separator) ("110EPS (P) Blue" supplied by Oji Paper Co., Ltd.) through flow casting so as to have a dry thickness of 40 µm, heated and dried at 120°C under normal atmospheric pressure for 5 minutes, and thereby formed a pressure-sensitive adhesive layer. Next, a 35-µm thick tough pitch copper foil was applied to the surface of the pressure-sensitive adhesive layer, followed by aging at 40°C for one day.
Next, a laminate having a structure of "(metallic foil)/(pressure-sensitive adhesive layer)" was obtained by removing the separator 110EPS (P) Blue. The laminate was shaped using a press and a drawing die having spacings (pitches) "a" and "b" in Fig. 1 of each 5 mm, a punch outer diameter of 0.425 mm, and a die inner diameter of 0.5 mm. Thus, an electroconductive pressure-sensitive adhesive tape having conducting parts and terminals with the shapes illustrated in Fig. 2 was obtained.
In addition, a polyolefinic separator was applied as a separator to the adhesive face of the electroconductive pressure-sensitive adhesive tape. The polyolefinic separator included a polyethylene film (80 µm thick), one surface of which had undergone a surface-release treatment.

### Example 2

An electroconductive pressure-sensitive adhesive tape having conduction paths (conducting parts and terminals) was obtained by the procedure of Example 1, except for using the acrylic polymer solution B as the acrylic polymer solution.

### Example 3

An electroconductive pressure-sensitive adhesive tape having conduction paths was obtained by the procedure of Example 1, except for using the acrylic polymer solution C as the acrylic polymer solution.

### Example 4

A pressure-sensitive adhesive composition solution was prepared by combining the acrylic polymer solution A with 30 parts by weight of a polymerized rosin pentaerythritol ester ("PENSEL D-125" supplied by Arakawa Chemical Industries, Ltd.) as a tackifier resin, and subsequently 2 parts by weight of a crosslinking agent "CORONATE L" (supplied by Nippon Polyurethane Industry Co., Ltd., isocyanate crosslinking agent), each per 100 parts by weight of the acrylic polymer solution A, followed by mixing.
An electroconductive pressure-sensitive adhesive tape having conduction paths was obtained by the procedure of Example 1, except for using the above-prepared pressure-sensitive adhesive composition solution.

### Example 5

A pressure-sensitive adhesive composition solution (electroconductive pressure-sensitive adhesive solution) was obtained by combining the acrylic polymer solution A with 2 parts by weight of a crosslinking agent "CORONATE L" (supplied by Nippon Polyurethane Industry Co., Ltd., isocyanate crosslinking agent) and 35 parts by weight of an electroconductive filler "4SP-400" (supplied by Novamet Specialty Products Corporation, filler diameter d₅₀: 12.0 µm, filler diameter d₈₅: 26.2 µm, spheroidal), each per 100 parts by weight of the acrylic polymer A, followed by mixing with a stirrer for 10 minutes.
The above-prepared pressure-sensitive adhesive composition solution was applied onto a 163-µm thick release paper (separator) ("110EPS (P) Blue" supplied by Oji Paper Co., Ltd.) by flow casting so as to have a dry thickness of 20 µm and heated and dried at 120°C under normal atmospheric pressure for 5 minutes to form a pressure-sensitive adhesive layer. Next, a 40-µm thick aluminum foil (trade name "BESPA" supplied by SUMIKEI ALUMINUM FOIL Co., Ltd.) was applied to the surface of the pressure-sensitive adhesive layer, aged at 40°C for one day, and thereby yielded an electroconductive pressure-sensitive adhesive tape.

### Example 6

An electroconductive pressure-sensitive adhesive tape was obtained by the procedure of Example 5, except for using the acrylic polymer solution B as the acrylic polymer solution.

### Example 7

An electroconductive pressure-sensitive adhesive tape was obtained by the procedure of Example 5, except for using the acrylic polymer solution C as the acrylic polymer solution.

### Example 8

A pressure-sensitive adhesive composition solution (electroconductive pressure-sensitive adhesive solution) was obtained by combining the acrylic polymer solution A with 30 parts by weight of a polymerized rosin pentaerythritol ester ("PENSEL D-125" supplied by Arakawa Chemical Industries, Ltd.) as a tackifier resin, and subsequently with 2 parts by weight of a crosslinking agent "CORONATE L" (supplied by Nippon Polyurethane Industry Co., Ltd., isocyanate crosslinking agent), and 35 parts by weight of an electroconductive filler "4SP-400" (supplied by Novamet Specialty Products Corporation, filler diameter d₅₀: 12.0 µm, filler diameter d₈₅: 26.2 µm, spheroidal), each per 100 parts by weight of the acrylic polymer A, followed by mixing with a stirrer for 10 minutes.
Except for using the above-prepared pressure-sensitive adhesive composition solution, an electroconductive pressure-sensitive adhesive tape was obtained by the procedure of Example 5.

### Comparative Example 1

An electroconductive pressure-sensitive adhesive tape having conduction paths was obtained by the procedure of Example 1, except for using the acrylic polymer solution D as the acrylic polymer solution.

### Comparative Example 2

An electroconductive pressure-sensitive adhesive tape having conduction paths was obtained by the procedure of Example 1, except for using the acrylic polymer solution E as the acrylic polymer solution.

### Comparative Example 3

An electroconductive pressure-sensitive adhesive tape having conduction paths was obtained by the procedure of Example 1, except for using the acrylic polymer solution F as the acrylic polymer solution.

### Comparative Example 4

An electroconductive pressure-sensitive adhesive tape was obtained by the procedure of Example 5, except for using the acrylic polymer solution D as the acrylic polymer solution.

### Comparative Example 5

An electroconductive pressure-sensitive adhesive tape was obtained by the procedure of Example 5, except for using the acrylic polymer solution E as the acrylic polymer solution.

### Comparative Example 6

An electroconductive pressure-sensitive adhesive tape was obtained by the procedure of Example 5, except for using the acrylic polymer solution F as the acrylic polymer solution.

### [Evaluations]

The electroconductive pressure-sensitive adhesive tapes obtained in the examples and comparative examples were examined for the following evaluations. The results are indicated in Table 1.

### (1) Amount of Extracted (Meth)Acrylic Acid Ions

### (Preparation of Specimen)

A tape piece having a size of 10 cm wide by 10 cm long was cut from each of the electroconductive pressure-sensitive adhesive tapes obtained in the examples and comparative examples. The separator was removed from the tape piece to expose an adhesive face to thereby yield a specimen having the exposed adhesive face (area of exposed adhesive face: 100 cm²).

### (Boiling Extraction of (Meth)acrylic Acid Ions)

Next, the specimen was placed in pure water (50 ml) at a temperature of 100°C, followed by boiling extraction through boiling for 45 minutes, and an extract was obtained.
Next, the total amount (unit: ng) of acrylic acid ions and methacrylic acid ions in the above-obtained extract was measured through ion chromatography (ion chromatographic technique), from which the total amount (unit: ng/cm²) of acrylic acid ions and methacrylic acid ions per unit area of the adhesive face (exposed adhesive face) of the specimen was calculated. The measurement results are indicated in "Amount of extracted (meth)acrylic acid ions" in Table 1.

### [Conditions for Ion Chromatographic Measurement]

Analyzer: DX-320 supplied by Dionex Corporation (now subsidiary of Thermo Fisher Scientific Inc.)
Separation column: Ion Pac AS15 (4 mm by 250 mm)
Guard column: Ion Pac AG15 (4 mm by 50 mm)
Suppressor: ASRS-ULTRA (external mode, 100 mA)
Detector: Electroconductivity detector
Eluent: 7 mM KOH (0 to 20 min.)
   45 mM KOH (20 to 30 min.)
   (using Eluent Generator EG40)
Eluent flow rate: 1.0 ml/min.
Sample injection volume: 250 µl

### (2) Volume Resistance

A tape piece having a size of 10 mm wide by 100 mm long was cut from each of the electroconductive pressure-sensitive adhesive tapes (single-sided pressure-sensitive adhesive tapes) obtained in the examples and comparative examples, from which the separator was removed to expose an adhesive face, and thus an electroconductive pressure-sensitive adhesive tape piece 23 having the exposed adhesive face was obtained.
Next, as illustrated in Fig. 3, a copper foil 22 (size: 10 mm wide by 100 mm long by 35 µm thick) was fixed to a glass plate 21 (soda-lime glass, size: 80 mm wide by 80 mm long by 3.2 mm thick), and the above-obtained electroconductive pressure-sensitive adhesive tape piece 23 was applied onto the copper foil 22 and the glass plate 21. Next, the electroconductive pressure-sensitive adhesive tape piece 23 was bonded thereto through compression bonding by one reciprocating movement of a 2-kg roller to give a test sample. The contact area between the copper foil 22 and the electroconductive pressure-sensitive adhesive tape piece 23 was 100 mm² .
The test sample was left stand at room temperature (in an atmosphere of temperature of 23°C and relative humidity of 50%) at least for 12 hours and was connected to a direct-current power supply 24, a direct-current ampere meter 25, a direct-current voltmeter 26, and leads 27a and 27b to form a circuit as illustrated in Fig. 3. Thus, a resistance (volume resistance) was measured and defined as the "volume resistance." The test results are indicated in "Volume resistance" in Table 1. The resistance (Ω) was determined by dividing the voltage (V) read from the direct-current voltmeter 26 by the current (A) read from the direct-current ampere meter 25.

### (3) Less-corrosive Properties (Discoloration of Copper Foil)

A tape piece having a size of 1 cm wide by 15 cm long was cut from each of the electroconductive pressure-sensitive adhesive tapes obtained in the examples and comparative examples. The separator was removed from the tape piece to expose an adhesive face, and the adhesive face was applied to a copper foil (size: 40 cm wide by 50 cm long by 35 µm thick) and thereby yielded a test sample.
The test sample was held in an atmosphere of a temperature of 60°C and relative humidity of 95% for 250 hours and retrieved to an atmosphere at a temperature of 23°C and relative humidity of 50%. Next, the electroconductive pressure-sensitive adhesive tape was peeled off from the copper foil, and the surface of the copper foil in the test sample where the electroconductive pressure-sensitive adhesive tape had been applied was visually observed. A sample where the surface was discolored was considered as being corroded on the copper foil and was evaluated as being "poor" in less-corrosive properties; whereas a sample where the surface was not discolored was considered as not being corroded on the copper foil and was evaluated as being "good" in less-corrosive properties. The evaluation results are indicated in "Less-corrosive properties (Copper foil discoloration)" in Table 1.

### (4) Less-corrosive Properties (Rate of Resistance Change)

The volume resistance measured in "(2) Volume Resistance" was defined as an "initial resistance." Next, the test sample after the measurement of initial resistance was held in an atmosphere of a temperature of 60°C and relative humidity of 95% for 250 hours, returned to an atmosphere of room temperature (23°C, relative humidity of 50%), and a volume resistance of the test sample was measured by the procedure of "(2) Volume Resistance," and this was defined as a "resistance after heat-moisture treatment."
A resistance change due to exposure to a hot and humid environment (heat-moisture treatment) was calculated by subtracting the "initial resistance" from the "resistance after heat-moisture treatment." The rate of the resistance change relative to the "initial resistance" was calculated according to the expression [((Resistance after heat-moisture treatment)-(Initial resistance))/(Initial resistance) × 100], and this was defined as a "rate of resistance change." A sample having a rate of resistance change as calculated above of 100% or less was evaluated as being "good" in less-corrosive properties; whereas a sample having the rate of resistance change of more than 100% was evaluated as being "poor" in less-corrosive properties. The evaluation results are indicated in "Less-corrosive properties (Resistance)" in Table 1.

**[Table 1]**

| (TABLE 1) | | | | |
|---|---|---|---|---|
| | Amount of extracted (meth)acrylic acid ions | Volume resistance | Less-corrosive properties | |
| | (ng/cm²) | (Ω) | Copper foil discoloration | Rate of resistance change (%) |
| Example 1 | 18 | 1.83x10⁻² | Good | 55 |
| Example 2 | 10 | 7.57x10⁻³ | Good | 35 |
| Example 3 | <1 | 2.56x10⁻² | Good | 10 |
| Example 4 | 11 | 1.67x10⁻² | Good | 11 |
| Example 5 | 7 | 1.27x10⁻¹ | Good | 45 |
| Example 6 | 2.6 | 2.01x10⁻¹ | Good | 22 |
| Example 7 | <1 | 2.35x10⁻¹ | Good | 20 |
| Example 8 | 3 | 9.80x10⁻² | Good | 15 |
| Comparative Example 1 | 95 | 9.90x10⁻³ | Poor | 350 |
| Comparative Example 2 | 50 | 9.53x10⁻³ | Poor | 120 |
| Comparative Example 3 | 31 | 7.33x10⁻³ | Poor | 150 |
| Comparative Example 4 | 65 | 1.78x10⁻¹ | Poor | 220 |
| Comparative Example 5 | 35 | 1.71x10⁻¹ | Poor | 190 |
| Comparative Example 6 | 26 | 1.98x10⁻¹ | Poor | 105 |

As is demonstrated by the results in Table 1, electroconductive pressure-sensitive adhesive tapes according to the present invention (Examples) are satisfactorily less corrosive to a metal (copper foil) and exhibit stable electrical conductivity. In contrast, electroconductive pressure-sensitive adhesive tapes having an excessively large amount of extracted (meth)acrylic acid ions (Comparative Examples) are more corrosive to the metal (copper foil) and, when placed in a hot and humid environment (60°C, relative humidity of 95%), have an increased resistance and thereby have significantly inferior electrical conductivity.

### Industrial Applicability

Electroconductive pressure-sensitive adhesive tapes according to embodiments of the present invention have excellent electrical conductivity, are satisfactorily less corrosive, and are used typically for electrical conduction between two points separated from each other; and for electromagnetic shielding of electric/electronic appliances and cables. In particular, the electroconductive pressure-sensitive adhesive tapes according to the present invention are less corrosive over the long term and are preferably used for electronic appliances which require long-term stable electrical conductivity. Specifically, they are advantageously used typically for grounding of printed circuit boards; grounding of external shielding cases of electronic appliances; earthing for static protection; and internal wiring (interconnections) of power sources and electronic appliances.

### Reference Signs List

11 electroconductive pressure-sensitive adhesive tape T₁
111 metallic foil
112 acrylic pressure-sensitive adhesive layer
12 conducting part
13 terminal
21 glass plate
22 copper foil
23 electroconductive pressure-sensitive adhesive tape piece
24 direct-current power supply
25 direct-current ampere meter
26 direct-current voltmeter
27a, 27b lead
28a to 28d pinch clip

## Claims

1. An electroconductive pressure-sensitive adhesive tape comprising at least one acrylic pressure-sensitive adhesive layer, having a volume resistance of 1× 10¹ Ω or less, and having a total amount of acrylic acid ions and methacrylic acid ions extracted from the electroconductive pressure-sensitive adhesive tape of 20 ng/cm² or less per unit area of the acrylic pressure-sensitive adhesive layer, where the extraction is performed with pure water under conditions of 100°C for 45 minutes, and the total amount is measured through ion chromatography.

2. The electroconductive pressure-sensitive adhesive tape according to claim 1, wherein the electroconductive pressure-sensitive adhesive tape comprises a metallic foil; and the acrylic pressure-sensitive adhesive layer present on or above one side of the metallic foil, and wherein the metallic foil has a conducting part penetrating the acrylic pressure-sensitive adhesive layer and having a terminal at the extremity thereof.

3. The electroconductive pressure-sensitive adhesive tape according to claim 1, wherein the acrylic pressure-sensitive adhesive layer contains an acrylic polymer; and an electroconductive filler in an amount of from 10 to 500 parts by weight relative to the total amount (100 parts by weight) of monomer component(s) constituting the acrylic polymer.

4. The electroconductive pressure-sensitive adhesive tape according to claim 3, comprising a metallic foil; and the acrylic pressure-sensitive adhesive layer present on or above at least one side of the metallic foil.
